# EUROPÄISCHE PATENTSCHRIFT

(11) **EP 3 522 329 B1**
(45) Veröffentlichungstag und Bekanntmachung des Hinweises auf die Patenterteilung: **23.04.2025**
(21) Anmeldenummer: 19155005.2
(22) Anmeldetag: 01.02.2019
(51) Int. Cl.: H02J 7/00, H02J 7/34

(54) **BATTERIEBETRIEBENE MULTIFUNKTIONSEINHEIT UND DEREN VERWENDUNG SOWIE VORRICHTUNG ZUR ERFASSUNG VON MESS- UND/ODER VERBRAUCHSDATEN**
BATTERY-POWERED MULTIFUNCTIONAL UNIT AND ITS USE AS WELL AS DEVICE FOR DETECTING MEASUREMENT DATA AND/OR CONSUMPTION DATA
UNITÉ MULTIFONCTIONNELLE FONCTIONNANT SUR BATTERIE ET SON UTILISATION AINSI QUE DISPOSITIF DE SAISIE DES DONNÉES DE MESURE ET / OU DE CONSOMMATION

(30) Priorität: 01.02.2018 DE 102018102225
(43) Veröffentlichungstag der Anmeldung: 07.08.2019
(73) Patentinhaber: QUNDIS GmbH, 99098 Erfurt (DE)
(72) Erfinder: Pihler, Darko, 2000 Maribor (SI); Kramberger, Iztok, 2000 Maribor (SI); Novak, Darko, 2000 Maribor (SI)
(74) Vertreter: Liedtke & Partner Patentanwälte

(56) Entgegenhaltungen:
- EP-A2- 2 720 975
- DE-A1- 102004 001 658
- DE-A1- 102008 003 811
- US-A1- 2005 077 880
- US-B1- 6 628 107

## Beschreibung

Die Erfindung betrifft eine batteriebetriebene Multifunktionseinheit und deren Verwendung sowie eine Vorrichtung zur Erfassung von Mess- und/oder Verbrauchsdaten.

Batteriebetriebene Multifunktionseinheiten mit einer Batterie wie zum Beispiel einer Lithium-Ionen-Batterie bieten große Vorteile in Bezug auf die Anwendungs- und Lebenslaufzeit. Beispielsweise weisen Lithium-Batterien eine Laufzeit von 15 Jahren und mehr auf. Hinsichtlich höherer Lasten, insbesondere Stromlasten, ist die Laufzeit einer Batterie begrenzt. Höhere Stromlastimpulse können die Lebenslaufzeit reduzieren und belasten die Batterie. Dabei gilt: Je höher der von der Batterie entnommene Strom ist, desto kürzer ist die Batterielaufzeit.

In der US 6 628 107 B1 wird ein Energiemanagement für ein tragbares elektronisches Gerät beschrieben. Ein Superkondensator ist parallel zu einer Hauptbatterie des tragbaren elektronischen Geräts geschaltet. Wenn die Hauptbatterie abgeklemmt wird, wird der Superkondensator verwendet, um das tragbare elektronische Gerät mit Strom zu versorgen. Der Superkondensator wird auch verwendet, um die interne Impedanz der Hauptbatterie und die Pfadimpedanz zwischen der Hauptbatterie und der Last zu kompensieren.

Aus der DE 10 2008 003 811 A1 ist ein batteriebetriebener Gefahrmelder mit Strompuffereinrichtung bekannt. Der Gefahrmelder umfasst einen Batterieanschluss, eingerichtet zum Anschließen einer Batterie, die Strompuffereinrichtung, welche parallel zu dem Batterieanschluss geschaltet ist, und ein GefahrmeIdemodul, welches ohne Zwischenschaltung eines getakteten Spannungswandlers mit dem Batterieanschluss verbunden ist. Die Strompuffereinrichtung ist derart eingerichtet, dass in Zeitabschnitten mit einer hohen Stromentnahme durch das Gefahrmeldemodul Strom von der Strompuffereinrichtung für das Gefahrmeldemodul bereitstellbar ist und in Zeitabschnitten mit einer geringen Stromentnahme durch das Gefahrmeldemodul Strom von der Batterie zu der Strompuffereinrichtung transferierbar ist.

Der Erfindung liegt die Aufgabe zu Grunde, eine verbesserte batteriebetriebene Multifunktionseinheit anzugeben, die auch bei hohen Stromspitzen eine lange Lebensdauer aufweist. Darüber hinaus sind eine verbesserte Vorrichtung zur Erfassung von Mess- und/oder Verbrauchsdaten und eine Verwendung der verbesserten Multifunktionseinheit anzugeben.

Die Aufgabe wird erfindungsgemäß gelöst durch eine batteriebetriebene Multifunktionseinheit mit den Merkmalen des Patentanspruchs 1. Hinsichtlich einer Vorrichtung zur Erfassung von Mess- und/oder Verbrauchsdaten und einer Verwendung der Multifunktionseinheit, insbesondere in einer solchen Vorrichtung, werden die Aufgaben durch die Merkmale der Patentansprüche 6 bzw. 7 gelöst.

Vorteilhafte Ausgestaltungen der Erfindung sind Gegenstand der Unteransprüche.

Die erfindungsgemäße batteriebetriebene Multifunktionseinheit umfasst zumindest einen zum Anschließen einer Batterie eingerichteten Batterieanschluss und auch die daran angeschlossene Batterie, einen Kondensator, welcher parallel zu dem Batterieanschluss geschaltet ist, und ein Multifunktionsmodul, welches mindestens eine Datensammel- und/oder Speichereinheit sowie mindestens ein Funkmodul aufweist, und parallel zu der Batterie und dem Kondensator geschaltet ist, wobei mittels des Kondensators in Zeitabschnitten mit einer hohen Stromentnahme durch das Multifunktionsmodul Strom von dem Kondensator für das Multifunktionsmodul bereitstellbar und in Zeitabschnitten mit einer geringen Stromentnahme durch das Multifunktionsmodul Strom von der Batterie zum Kondensator transferierbar ist.

Beispielsweise ist die Multifunktionseinheit als ein Gateway mit einem Funkmodul ausgebildet. Das Gateway ist mittels des Funkmoduls mit einem Funkübertragungsnetz, zum Beispiel einem Mobilfunknetz, beispielsweise einem GSM-Netz und/oder UMTS-Netz und/oder LTE-Netz, verbunden. Das Gateway ist in einer möglichen Ausführungsform Teil einer Vorrichtung zum Erfassen von Mess- und/oder Verbrauchsdaten in einer Liegenschaft und überträgt beispielsweise Verbrauchs- und/oder Messdaten von Verbrauchsdatenerfassungseinheiten, Heizkostenverteilern oder anderen Geräten zu einem zentralen Server des Funkübertragungsnetzes, insbesondere zu einem QSMP-Server. Diese Verbrauchsdatenübertragung, insbesondere im Mobilfunknetz, beispielsweise mittels GPRS-Datenübertragung, erfordert üblicherweise hohe Stromspitzen von beispielsweise bis zu 1,6 A für 3 ms bei einer Frequenz von 200 Hz und einer Dauer von 30 Sekunden für beispielsweise 100 kB zu übertragender Datenmenge. Das Funkübertragungsnetz ist insbesondere eine drahtlose Datenübertragungseinrichtung, insbesondere ein Mobilfunknetz.

Diese hohen Stromspitzen und damit Leistungsspitzen verursachen im Allgemeinen einen Batteriespannungsverlust von bis zu 2,2 V vom Nennwert und verkürzen die Lebensdauer der Batterie.

Bei der erfindungsgemäßen batteriebetriebenen Multifunktionseinheit wird daher ein Kondensator, beispielsweise ein elektrischer Doppelschichtkondensator, erfindungsgemäß ein sogenannter EDLC-Kondensator (electric double-layer capacitor oder elektrochemischer Doppelschichtkondensator), parallel zur Batterie und zu dem Funkmodul geschaltet. Der Kondensator wirkt somit als ein Puffer für diese hohen Stromspitzen. Gegenüber herkömmlichen batteriebetriebenen Multifunktionseinheiten mit Funkmodul, insbesondere zur GPRS-Funkübertragung weist die erfindungsgemäße batteriebetriebene Multifunktionseinheit während eines GPRS-Datenübertragungszyklus als höchste Pulsspitze, die von der Batterie abgelassen wird, beispielsweise einen Wert von kleiner 500 mA auf, vorteilhafterweise werden 250 mA nicht überschritten. Somit ist die Strombelastung der Batterie deutlich reduziert. Im Vergleich zu einer Stromlastspitze von 1,6 A ohne Kondensator ist dies eine erhebliche Verbesserung. Durch die beschriebene Lösung tritt bei der Batterie beispielsweise nur ein Spannungseinbruch um 0,2 V auf. Dies ist eine erhebliche Verbesserung gegenüber einem Spannungseinbruch von 1,4 V oder bis zu 2,2 V ohne Kondensator.

In einer möglichen Ausführungsform ist der Kondensator ein Doppelschichtkondensator (auch ein EDLC Kondensator genannt mit EDLC = Electrochemical Double Layer Capacitor). Der erfindungsgemäße EDLC-Kondensator ist beispielsweise ein Lithium-Ionen-Kondensator (LiC).

Die Batterie ist eine auf Lithium beruhende Batterie, erfindungsgemäß eine Lithium- Thionylchlorid Batterie, bevorzugt eine Lithium-Thionylchlorid (LiSOCl2)-Batterie. In nicht erfindungsgemäßen Ausführngsformen ist die Batterie eine Lithium-Eisen-Schwefel Batterie, eine Lithium-Kohlenstoff-Fluor Batterie, eine Lithium-Mangan-Sauerstoff Batterie, eine Lithium-Magandioxid Batterie (LiM), und/oder eine Lithium-Schwefel-Sauerstoff Batterie. Durch die beschriebene Lösung werden somit die Einschränkungen überwunden, denen die Batterie, insbesondere die auf Lithium beruhende Batterie, insbesondere die Lithium-Thionylchlorid-Batterie, unterliegt. Das Problem solcher Batterien ist es, dass eine solche Batterie zwar eine vorteilhaft lange Laufzeit von beispielsweise 15 Jahren und mehr aufweist, diese Laufzeit jedoch hinsichtlich höherer Lasten, insbesondere Stromlasten, begrenzt ist, da insbesondere höhere Stromlastimpulse die Lebenslaufzeit der Batterie reduzieren und die Batterie belasten können. Dabei gilt, dass je höher der von der Batterie entnommene Strom ist, desto kürzer ist die Zeit, in der die Spannung aufrechterhalten werden kann. Der Doppelschichtkondensator, insbesondere der EDLC-Kondensator, weist eine deutlich höhere Impulsstromfestigkeit als die Batterie auf. Durch die Kombination von Batterie und Kondensator, insbesondere von auf Lithium beruhender Batterie, insbesondere Lithium-Thionylchlorid Batterie, und Doppelschichtkondensator, insbesondere EDLC-Kondensator, in Parallelschaltung werden deren Vorteile kombiniert und insbesondere das oben geschilderte Problem einer solchen Batterie vermieden, da auf die Batterie wirkende hohe Lasten, insbesondere hohe Stromspitzen, d. h. hohe Stromlastimpulse, vermieden werden.

Der Doppelschichtkondensator ist beispielsweise ein Superkondensator oder Ultrakondensator.

Darüber hinaus ist erfindungsgemäß das Funkmodul für Paketdatenübertragungen mittels Mobilfunktechnologien, wie zum Beispiel GPSR- und/oder EDGE-Verfahren und/oder UMTS-Verfahren und/oder LTE-Verfahren, vorgesehen.

Dabei kann die Multifunktionseinheit zur Überwachung von Messgeräten, insbesondere von elektronischen Heizkostenverteilern, und/oder Netzwerkknoten einer Datenübertragungseinrichtung innerhalb einer Liegenschaft vorgesehen sein und entsprechend eingerichtet sein.

Gemäß einer weiteren Ausführungsform ist die Multifunktionseinheit zur automatischen, vorzugsweise paketweisen Datenfernübertragung, insbesondere mittels GPRS und/oder EDGE-Verfahren und/oder UMTS-Verfahren und/oder LTE-Verfahren, vorgesehen.

Die batteriebetriebene Multifunktionseinheit wird erfindungsgemäß als Gateway in einer Liegenschaft zur Überwachung von Messgeräten, insbesondere elektronische Heizkostenverteiler, und/oder Netzwerkknoten einer Datenübertragungseinrichtung innerhalb der Liegenschaft verwendet.

Erfindungsgemäß umfasst die batteriebetriebene Multifunktionseinheit den zum Anschließen der Batterie eingerichteten Batterieanschluss, die an diesem Batterieanschluss angeschlossene Batterie, den Kondensator, welcher parallel zu dem Batterieanschluss geschaltet ist, das Funkmodul und das Multifunktionsmodul, welches mindestens eine Datensammel- und/oder Speichereinheit aufweist und parallel zu der Batterie und dem Kondensator geschaltet ist, wobei mittels des Kondensators in Zeitabschnitten mit einer hohen Stromentnahme durch das Multifunktionsmodul Strom von dem Kondensator für das Multifunktionsmodul bereitstellbar und in Zeitabschnitten mit einer geringen Stromentnahme durch das Multifunktionsmodul Strom von der Batterie zu dem Kondensator transferierbar ist.

Die Batterie ist eine auf Lithium beruhende Batterie, erfindungsgemäß eine Lithium- Thionylchlorid Batterie. Der Kondensator ist beispielsweise ein Doppelschichtkondensator. Erfindungsgemäß ist der Kondensator ein EDLC (Electrochemical Double Layer Capacitor), d. h. ein elektrochemischer Doppelschichtkondensator, beispielsweise ein Lithium-Ionen-Kondensator. Beispielsweise ist der Kondensator ein Superkondensator oder Ultrakondensator. Die Multifunktionseinheit, insbesondere deren Funkmodul, ist vorteilhafterweise zur Datenfernübertragung, insbesondere zur automatischen Datenfernübertragung, mittels eines Mobilfunknetzes vorgesehen, wobei diese Datenfernübertragung insbesondere als Paketdatenübertragung und somit als paketweise Datenfernübertragung erfolgt. Als Mobilfunktechnologie für die Datenfernübertragung ist beispielsweise GSM, GPRS, EDGE, UMTS und/oder LTE vorgesehen.

Die Vorrichtung zur Erfassung von Mess- und/oder Verbrauchsdaten umfasst vorteilhafterweise mehrere Messgeräte und/oder Heizkostenverteiler und/oder Netzwerkknoten, die mittels einer drahtlosen Datenübertragungseinrichtung über das Gateway, erfindungsgemäß über diese batteriebetriebene Multifunktionseinheit, mit dem Server datentechnisch verbunden sind, insbesondere über ein Mobilfunknetz mit dem Server datentechnisch verbunden sind, d. h. die als Gateway ausgebildete batteriebetriebene Multifunktionseinheit ist über das Mobilfunknetz mit dem Server datentechnisch verbunden, beispielsweise mittels GSM, GPRS, EDGE, UMTS und/oder LTE.

Die batteriebetriebene Multifunktionseinheit wird somit als Gateway, insbesondere in einer Liegenschaft, zur Überwachung von Messgeräten, insbesondere elektronischen Heizkostenverteilern, und/oder Netzwerkknoten einer Datenübertragungseinrichtung innerhalb einer Liegenschaft verwendet. Die batteriebetriebene Multifunktionseinheit ist somit ein Gateway zwischen zwei Netzen, d. h. zwischen der Datenübertragungseinrichtung der Liegenschaft mit den Messgeräten und/oder Netzwerkknoten und dem Mobilfunknetz.

Die beschriebene Lösung, insbesondere die elektrische Parallelschaltung von Batterie und Kondensator, bietet hier besondere Vorteile, insbesondere wenn die Batterie eine auf Lithium beruhende Batterie ist, insbesondere eine Lithium- Thionylchlorid Batterie, und wenn vorteilhafterweise der Kondensator ein Doppelschichtkondensator ist, insbesondere ein EDLC, und/oder ein Superkondensator oder Ultrakondensator. Die Batterie, insbesondere die Lithium- Thionylchlorid Batterie, weist eine sehr gute Kapazität auf, insbesondere eine sehr gute Energiedichte, aber eine geringe Strompulskapazität, d. h. sie wird durch Stromlastimpulse, also Stromspitzen, stark beeinträchtigt.

Durch die elektrische Parallelschaltung einer solchen Batterie mit dem Kondensator, welcher insbesondere als Doppelschichtkondensator, insbesondere als Superkondensator oder Ultrakondensator, insbesondere als EDLC, insbesondere als Lithium-Ionen-Kondensator, ausgebildet ist, weist diese Kombination aus Batterie und Kondensator eine sehr gute Strompulskapazität auf, d. h. sie wird nicht durch Stromlastimpulse, also Stromspitzen, beeinträchtigt. Die benötigte Spannung kann während der Dauer der Stromentnahme gut aufrechterhalten werden. Durch diese Lösung werden die Vorteile dieser Batterie und des Kondensators kombiniert und die Nachteile dieser Batterie werden vermieden, indem Stromlastimpulse durch den Kondensator aufgefangen werden und somit nicht auf die Batterie einwirken, denn in Zeitabschnitten mit einer hohen Stromentnahme durch das Multifunktionsmodul, d. h. in Zeitabschnitten mit hohen Stromlasten, insbesondere Stromlastimpulsen, wird der Strom für das Multifunktionsmodul vom Kondensator bereitstellgestellt, welcher in Zeitabschnitten mit einer geringen Stromentnahme durch das Multifunktionsmodul von der Batterie wieder geladen wird, indem dann Strom von der Batterie zum Kondensator transferiert wird. Diese hohen Stromlasten, insbesondere Stromlastimpulse, welche durch die Parallelschaltung des Kondensators nicht auf die Batterie wirken, treten insbesondere bei der Datenfernübertragung über das Mobilfunknetz auf. Mittels der beschriebenen Lösung wird somit insbesondere eine solche Datenfernübertragung über das Mobilfunknetz ermöglicht und es wird zudem eine lange Laufzeit der Batterie sichergestellt, da deren Belastung durch hohe Stromlastimpulse vermieden wird.

Die beschriebene Lösung, insbesondere die beschriebene elektrische Parallelschaltung von Batterie und Kondensator, ist beispielsweise für Stromlastimpulse mit zwei Ampere geeignet, kann jedoch ebenso für kleinere Ströme und insbesondere auch für kleinere Batterien verwendet werden. Beispielsweise kann durch diese Lösung für eine Anwendung, welche 200 mA Stromlastimpulse benötigt, eine kleine Batterie verwendet werden, welche kontinuierlich einen Gleichstrom von 50 mA bereitstellen kann und für Stromlastimpulse von 100 mA ausgelegt ist, beispielsweise eine AA-Batterie, d. h. eine Batterie im AA-Format, da die höheren Stromlastimpulse nicht oder zumindest wesentlich geringer auf die Batterie wirken, sondern auf den Kondensator. Im Vergleich zu Stromlastimpulsen von zwei Ampere kann hierbei zudem auch der Kondensator entsprechend kleiner ausgelegt sein.

Besonders vorteilhaft für die beschriebene Lösung ist die Ausbildung des Kondensators als Doppelschichtkondensator, insbesondere Superkondensator oder Ultrakondensator. Solche Kondensatoren sind unempfindlich gegen Stromspitzen bei der Ladung und Entladung und somit besonders unempfindlich gegen hohe Stromspitzen, wie sie beispielsweise bei der Verwendung der batteriebetriebenen Multifunktionseinheit als Gateway zur Datenfernübertragung über ein Mobilfunknetz auftreten. Er ist damit die ideale Ergänzung zur oben beschriebenen Batterie, welche den besonderen Vorteil hat, besonders langlebig zu sein, insbesondere aufgrund ihrer hohen Energiedichte und somit Kapazität, jedoch empfindlich gegenüber Stromspitzen ist. Besonders vorteilhaft ist hierbei die Ausbildung des Kondensators, insbesondere des Doppelschichtkondensators, insbesondere des Superkondensators oder Ultrakondensators, als EDLC, insbesondere als Lithium-Ionen-Kondensator, aufgrund seiner vorteilhaften Größe, seines vorteilhaften internen Widerstandes (geringer ESR), seiner vorteilhaften Kapazität und seines Preises. Dieser Kondensator ermöglicht insbesondere eine schnelle Aufladung, d. h. es ist ein besonders schneller Kondensator.

Ausführungsbeispiele der Erfindung werden im Folgenden anhand von Zeichnungen näher erläutert.

Darin zeigen:
- Figur 1: schematisch ein Blockschaltbild einer batteriebetriebenen Multifunktionseinheit zur Verwendung in einer Liegenschaft und
- Figur 2: ein Diagramm.

Einander entsprechende Teile sind in allen Figuren mit den gleichen Bezugszeichen versehen.

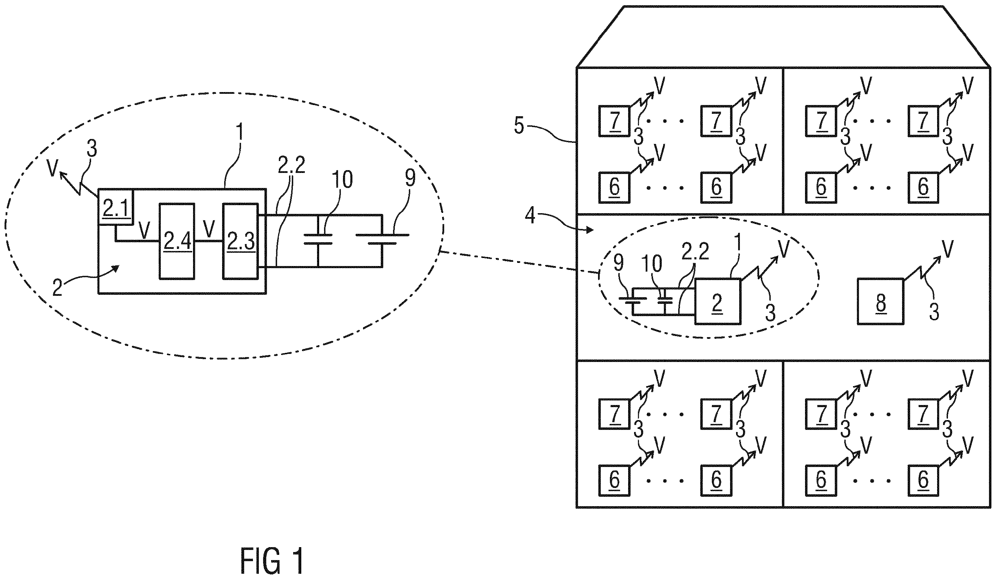

**Figur 1** zeigt eine batteriebetriebene Multifunktionseinheit 1 mit in Explosionsdarstellung vergrößerter Darstellung eines batteriebetriebenen Gateways 2.

Beispielsweise ist die batteriebetriebene Multifunktionseinheit 1 als ein Gateway 2 zur Fernauslesung von Sensoren oder Datenerfassungseinheiten 6, wie Rauchwarnmelder, Wärmezähler, Wasserzähler, und/oder Heizkostenverteiler 7 und/oder Datensammlern ausgebildet.

Das Gateway 2 umfasst ein Funkmodul 2.1 zur Fernübertragung der erfassten Verbrauchs- und/oder Messdaten. Mittels des Funkmoduls 2.1 ist das Gateway 2 Komponente in einem Funkübertragungsnetz 3 und mit diesem, zum Beispiel mit einem GSM-Netz, verbunden.

Das Gateway 2 ist in einer möglichen Ausführungsform Teil einer Vorrichtung 4 zum Erfassen von Verbrauchsdaten V in einer Liegenschaft 5 und überträgt beispielsweise die Verbrauchsdaten V von Verbrauchsdatenerfassungseinheiten 6 oder Heizkostenverteilern 7 oder anderen Geräten zu einem zentralen Server 8 des Funkübertragungsnetzes 3, insbesondere zu einem QSMP-Server. Mit anderen Worten: Das Gateway 2 übernimmt die Fernauslesung der Verbrauchsdatenerfassungseinheiten 6 und/oder der Heizkostenverteiler 7. Das Funkmodul 2.1 ist dazu als eine Mobilfunkschnittstelle (GSM-Netz) oder eine drahtlose Internetschnittstelle (WLAN-Netz) ausgebildet.

Die batteriebetriebene Multifunktionseinheit 1, insbesondere das Gateway 2, umfasst zumindest einen Batterieanschluss 2.2, der zum Anschließen einer Batterie 9 eingerichtet ist. Darüber hinaus umfasst die batteriebetriebene Multifunktionseinheit 1 einen Kondensator 10, welcher parallel zu dem Batterieanschluss 2.2 geschaltet ist. Der Batterieanschluss 2.2 umfasst einen Pluspol und einen Minuspol.

Die batteriebetriebene Multifunktionseinheit 1 umfasst darüber hinaus ein Multifunktionsmodul 2.3, welches mindestens eine Datensammel- und/oder Speichereinheit 2.4 umfasst. Das Multifunktionsmodul 2.3 ist parallel zu der Batterie 9 und dem Kondensator 10 geschaltet.

Die Komponenten der batteriebetriebenen Multifunktionseinheit 1, wie das Multifunktionsmodul 2.3 und das Funkmodul 2.1, werden mittels der Batterie 9 und des Kondensators 10 mit Strom versorgt, wie nachfolgend beschrieben.

Dabei ist das Multifunktionsmodul 2.3 derart eingerichtet, dass mittels des Kondensators 10 in Zeitabschnitten mit einer hohen Stromentnahme durch das Multifunktionsmodul 2.3 und/oder das Funkmodul 2.1 Strom von dem Kondensator 10 für das Multifunktionsmodul 2.3 bzw. das Funkmodul 2.1 bereitstellbar und in Zeitabschnitten mit einer geringen Stromentnahme durch das Multifunktionsmodul 2.3 und/oder das Funkmodul 2.1 Strom von der Batterie 9 zu dem Kondensator 10 transferierbar ist.

Der Kondensator 10 ist beispielsweise ein sogenannter EDLC-Kondensator und parallel zur Batterie 9 und zu dem Funkmodul 2.1 geschaltet. Gegenüber herkömmlichen batteriebetriebenen Multifunktionseinheiten mit Funkmodul zur GPRS-Funkübertragung weist die erfindungsgemäße batteriebetriebene Multifunktionseinheit 1 mit dem Funkmodul 2.1 während eines GPRS-Datenübertragungszyklus als höchste Pulsspitze, die von der Batterie 9 abgelassen wird, einen Wert von kleiner 500 mA auf.

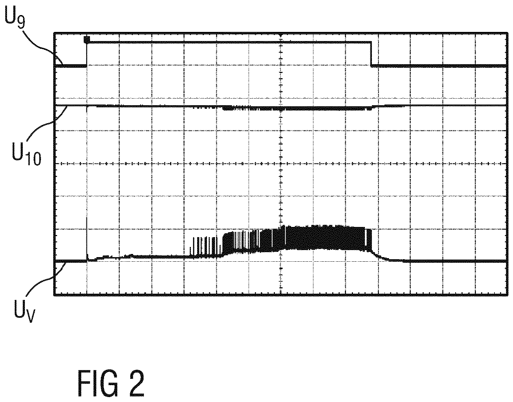

**Figur 2** zeigt ein Strom-Zeit-Diagramm, aus welchem die geringen Stromspitzen ersichtlich sind. Somit ist die Strombelastung der Batterie 9 deutlich reduziert.

Die Batterie 9 ist beispielsweise eine auf Lithium beruhende Batterie, vorzugsweise eine Lithium- Thionylchlorid Batterie, eine Lithium-Eisen-Schwefel Batterie, eine Lithium-Kohlenstoff-Fluor Batterie, eine Lithium-Mangan-Sauerstoff Batterie, und/oder eine Lithium-Schwefel-Sauerstoff Batterie und besonders bevorzugt eine Lithium- Thionylchlorid (LiSOCl2)-Batterie.

Der Doppelschichtkondensator kann auch als ein Superkondensator oder Ultrakondensator ausgebildet sein.

Das Funkmodul 2.1 ist insbesondere für Paketdatenübertragungen, vorzugsweise mittels Mobilfunktechnologien, wie zum Beispiel GPSR- oder EDGE-Verfahren, vorgesehen.

Die batteriebetriebene Multifunktionseinheit 1 kann zur Überwachung von Messgeräten, insbesondere von elektronischen Heizkostenverteilern 7, und/oder Netzwerkknoten einer Datenübertragungseinrichtung innerhalb einer Liegenschaft 5 und zur automatischen, vorzugsweise paketweisen Datenfernübertragung, insbesondere mittels GPRS und/oder EDGE-Verfahren, vorgesehen und eingerichtet sein.

### BEZUGSZEICHENLISTE

- 1: batteriebetriebene Multifunktionseinheit
- 2: Gateway
- 2.1: Funkmodul
- 2.2: Batterieanschluss
- 2.3: Multifunktionsmodul
- 2.4: Datensammel- und/oder Speichereinheit
- 3: Funkübertragungsnetz
- 4: Vorrichtung
- 5: Liegenschaft
- 6: Verbrauchsdatenerfassungseinheit
- 7: Heizkostenverteiler
- 8: zentraler Server
- 9: Batterie
- 10: Kondensator

- V: Verbrauchsdaten

## Patentansprüche

1. Batteriebetriebene Multifunktionseinheit (1)
- mit einem zum Anschließen einer Batterie (9) eingerichteten Batterieanschluss (2.2) und die daran angeschlossene Batterie (9),
- mit einem Kondensator (10), welcher parallel zu dem Batterieanschluss (2.2) geschaltet ist,
- mit einem Funkmodul (2.1) und
- mit einem Multifunktionsmodul (2.3), welches
• mindestens eine Datensammel- und/oder Speichereinheit (2.4) aufweist, und
• parallel zu der Batterie (9) und dem Kondensator (10) geschaltet ist,
wobei mittels des Kondensators (10)
- in Zeitabschnitten mit einer hohen Stromentnahme durch das Multifunktionsmodul (2.3) Strom von dem Kondensator (10) für das Multifunktionsmodul (2.3) bereitgestellt wird und
- in Zeitabschnitten mit einer geringen Stromentnahme durch das Multifunktionsmodul (2.3) Strom von der Batterie (9) zu dem Kondensator (10) transferierbar ist,
und wobei die Batterie (9) eine Lithium-Thionylchlorid Batterie ist,
**dadurch gekennzeichnet, dass**
- der Kondensator (10) ein Electrochemical Double Layer Capacitor ist, und
- das Funkmodul (2.1) für Paketdatenübertragungen mittels Mobilfunktechnologien vorgesehen ist.

2. Batteriebetriebene Multifunktionseinheit (1) nach Anspruch 1, wobei der Kondensator (10) ein Doppelschichtkondensator ist.

3. Batteriebetriebene Multifunktionseinheit (1) nach Anspruch 2, wobei der Doppelschichtkondensator ein Superkondensator oder Ultrakondensator ist.

4. Batteriebetriebene Multifunktionseinheit (1) nach einem der vorhergehenden Ansprüche, wobei die batteriebetriebene Multifunktionseinheit (1) zur Überwachung von Messgeräten (6), insbesondere elektronische Heizkostenverteiler (7), und/oder Netzwerkknoten einer Datenübertragungseinrichtung (3) innerhalb einer Liegenschaft (5) vorgesehen ist.

5. Batteriebetriebene Multifunktionseinheit (1) nach einem der vorhergehenden Ansprüche, wobei die batteriebetriebene Multifunktionseinheit (1) zur automatischen, vorzugsweise paketweisen Datenfernübertragung, insbesondere mittels GPRS und/oder EDGE-Verfahren, vorgesehen ist.

6. Verwendung einer batteriebetriebenen Multifunktionseinheit (1) nach einem der vorhergehenden Ansprüche als Gateway (2) in einer Liegenschaft (5) zur Überwachung von Messgeräten (6), insbesondere elektronische Heizkostenverteiler (7), und/oder Netzwerkknoten einer Datenübertragungseinrichtung innerhalb der Liegenschaft (5).

7. Vorrichtung (4) zur Erfassung von Mess- und/oder Verbrauchsdaten (V), umfassend mehrere Messgeräte (6) und/oder Heizkostenverteiler (7) und/oder Netzwerkknoten, die mittels einer drahtlosen Datenübertragungseinrichtung (3), insbesondere mittels eines Mobilfunknetzes, über ein als eine batteriebetriebene Multifunktionseinheit (1) nach einem der Ansprüche 1 bis 5 ausgebildetes Gateway (2) mit einem Server (8) datentechnisch verbunden sind.

## Claims

1. Battery-operated multifunction unit (1)
- having a battery connection (2.2), which is configured for connecting a battery (9), and the battery (9) connected thereto,
- having a capacitor (10), which is connected in parallel with the battery connection (2.2),
- having a radio module (2.1) and
- having a multifunction module (2.3) that
• has at least one data collection and/or storage unit (2.4), and
• is connected in parallel with the battery (9) and the capacitor (10),
wherein the capacitor (10)
- is used to supply current from the capacitor (10) for the multifunction module (2.3) during periods of high current draw by the multifunction module (2.3), and
- can be used to transfer current from the battery (9) to the capacitor (10) during periods of low current draw by the multifunction module (2.3),
and wherein the battery (9) is a lithium thionyl chloride battery, **characterized in that**
- the capacitor (10) is an electrochemical double layer capacitor, and
- the radio module (2.1) is intended for packet data transmissions by means of mobile radio technologies.

2. Battery-operated multifunction unit (1) according to Claim 1, wherein the capacitor (10) is a double layer capacitor.

3. Battery-operated multifunction unit (1) according to Claim 2, wherein the double layer capacitor is a supercapacitor or ultracapacitor.

4. Battery-operated multifunction unit (1) according to one of the preceding claims, wherein the battery-operated multifunction unit (1) is intended for monitoring measuring devices (6), in particular electronic heat cost allocators (7), and/or network nodes of a data transmission device (3) within a property (5).

5. Battery-operated multifunction unit (1) according to one of the preceding claims, wherein the battery-operated multifunction unit (1) is intended for automatic, preferably packet-wise remote data transmission, in particular by means of GPRS and/or EDGE methods.

6. Use of a battery-operated multifunction unit (1) according to one of the preceding claims as a gateway (2) in a property (5) for monitoring measuring devices (6), in particular electronic heat cost allocators (7), and/or network nodes of a data transmission device within the property (5).

7. Device (4) for capturing measurement and/or consumption data (V), comprising multiple measuring devices (6) and/or heat cost allocators (7) and/or network nodes that are connected for data purposes to a server (8) by means of a wireless data transmission device (3), in particular by means of a mobile radio network, via a gateway (2) that is in the form of a battery-operated multifunction unit (1) according to one of Claims 1 to 5.

## Revendications

1. Unité multifonctionnelle fonctionnant sur batterie (1) comprenant
- une borne de batterie (2.2) conçue pour raccorder une batterie (9) et la batterie (9) qui y est raccordée,
- un condensateur (10), qui est connecté en parallèle avec la borne de batterie (2.2),
- un module radio (2.1), et
- un module multifonctionnel (2.3), qui
• comporte au moins une unité de collecte et/ou de stockage de données (2.4), et
• est connectée en parallèle avec la batterie (9) et le condensateur (10),
dans laquelle, au moyen du condensateur (10)
- au cours d'intervalles de temps comprenant un fort prélèvement de courant par le module multifonctionnel (2.3), du courant est fourni par le condensateur (10) au module multifonctionnel (2.3), et
- au cours d'intervalles de temps comprenant un faible prélèvement de courant par le module multifonctionnel (2.3), du courant peut être transféré de la batterie (9) au condensateur (10),
et dans laquelle la batterie (9) est une batterie au lithium-chlorure de thionyle, **caractérisée en ce que**
- le condensateur (10) est un condensateur électrochimique double couche, et
- le module radio (2.1) est prévu pour des transmissions de données par paquets au moyen de technologies de radiocommunication mobile.

2. Unité multifonctionnelle fonctionnant sur batterie (1) selon la revendication 1, dans laquelle le condensateur (10) est un condensateur double couche.

3. Unité multifonctionnelle fonctionnant sur batterie (1) selon la revendication 2, dans laquelle le condensateur double couche est un supercondensateur ou un ultracondensateur.

4. Unité multifonctionnelle (1) fonctionnant sur batterie selon l'une des revendications précédentes, dans laquelle l'unité multifonctionnelle (1) fonctionnant sur batterie est prévue pour surveiller des appareils de mesure (6), notamment des répartiteurs électroniques de frais de chauffage (7), et/ou des nœuds de réseau d'un dispositif de transmission de données (3) à l'intérieur d'un immeuble (5).

5. Unité multifonctionnelle fonctionnant sur batterie (1) selon l'une des revendications précédentes, dans laquelle l'unité multifonctionnelle fonctionnant sur batterie (1) est prévue pour la télétransmission automatique de données, de préférence par paquets, notamment au moyen d'un procédé GPRS et/ou EDGE.

6. Utilisation d'une unité multifonctionnelle (1) fonctionnant sur batterie selon l'une des revendications précédentes en tant que passerelle (2) dans un immeuble (5) pour surveiller des appareils de mesure (6), notamment des répartiteurs électroniques de frais de chauffage (7), et/ou des nœuds de réseau d'un dispositif de transmission de données au sein de l'immeuble (5).

7. Dispositif (4) d'acquisition de données de mesure et/ou de consommation (V), comprenant plusieurs appareils de mesure (6) et/ou répartiteurs de frais de chauffage (7) et/ou nœuds de réseau, qui sont reliés par transmission de données à un serveur (8) au moyen d'un dispositif de transmission de données sans fil (3), notamment au moyen d'un réseau de téléphonie mobile, par l'intermédiaire d'une passerelle (2) réalisée sous la forme d'une unité multifonctionnelle fonctionnant sur batterie (1) selon l'une des revendications 1 à 5.
